# EUROPÄISCHE PATENTSCHRIFT

(11) **EP 1 603 775 B1**
(45) Veröffentlichungstag und Bekanntmachung des Hinweises auf die Patenterteilung: **28.02.2007**
(21) Anmeldenummer: 03773541.2
(22) Anmeldetag: 17.10.2003
(51) Int. Cl.: B60R 21/00, B60R 21/34

(54) **VORRICHTUNG ZUR ÜBERWACHUNG EINER FRONTHAUBE EINES FAHRZEUGS**
DEVICE FOR MONITORING A BONNET ON A VEHICLE
DISPOSITIF DE CONTROLE D'UN CAPOT D'UN VEHICULE

(30) Priorität: 06.03.2003 DE 10309715
(43) Veröffentlichungstag der Anmeldung: 14.12.2005
(73) Patentinhaber: ROBERT BOSCH GMBH, 70442 Stuttgart (DE)
(72) Erfinder: MATTES, Bernhard, 74343 Sachsenheim (DE)
(86) Internationale Anmeldenummer: PCT/DE2003/003447
(87) Internationale Veröffentlichungsnummer: WO 2004/078528

(56) Entgegenhaltungen:
- DE-A- 10 059 225
- DE-A- 19 851 489

## Beschreibung

### Stand der Technik

Die Erfindung geht aus von einer Vorrichtung zur Überwachung einer Fronthaube eines Fahrzeugs nach der Gattung des unabhängigen Patentanspruchs.

Aus der gattungsgemäßen DE 19851489 A1 ist zur Verminderung der Verletzungsschwere bei Kollision eines Kraftfahrzeugs mit Fußgängern eine kraftfahrzeugfrontale Haube dadurch energieumsetzend ausgebildet, dass sie zwischen einer lastverteilenden hautartigen Deckschicht und einer biegesteifen Unterstruktur eine beim Unfall aufblasbare Kammern bildende Zwischenschicht aufweist. Der Unfall wird mittels eines Precrash- oder Berührungssensors erkannt. Aus DE 10059225 A1 ist ein Karosserieteil für ein Fahrzeug, insbesondere eine Fronthaube für ein Kraftfahrzeug, mit einer Sicherheitseinrichtung zum Schutz von Fußgängern bekannt. Dabei ist eine bereichsweise zweischichtig aus einer unteren Außenhautschicht und einer oberen Außenhautschicht aufgebaute Außenhaut, die in einer Aufprallsituation in diesem zweischichtigen Bereich durch Einbringen eines Mediums, vorzugsweise eines Gases, zwischen die untere und die obere Außenhautschicht als Sicherheitseinrichtung zum Aufprallschutz auf das Karosserieteil aufweitbar, insbesondere aufblasbar, ist. Das Karosserieteil ist insgesamt zweischichtig ausgebildet, dergestalt, dass die untere Außenhautschicht an den Randbereichen des Karosserieteils nach oben geführt ist und in einem Übergangsbereich in die obere Außenhautschicht übergeht. Vorzugsweise liegt in der oberen Außenhautschicht dabei im nicht aktivierten Zustand der Sicherheitseinrichtung in einer Anlageverbindung unmittelbar auf der Außenhautschicht auf.

Aus DE 100 13 563 A1 ist es bekannt, eine Fronthaube bei einem Fußgängeraufprall aufzurichten, um die Verletzungsgefahr für den Fußgänger zu reduzieren.

Nachteilig daran ist, dass der Zustand der Fronthaube nicht überwacht wird.

Aufgabe der Erfindung ist es, eine Vorrichtung zu schaffen, die eine Überwachung einer Fronthaube vorsieht und dieses Signal für den Insassenschutz verwendet.

### Vorteile der Erfindung

Die erfindungsgemäße Vorrichtung zur Überwachung einer Fronthaube eines Fahrzeugs mit den Merkmalen des unabhängigen Patentanspruchs hat demgegenüber den Vorteil, dass nunmehr erkannt wird, ob eine Fronthaube nicht oder nicht ganz geschlossen ist. Dieses Datum kann dann bei einem Algorithmus für ein Rückhaltesystem berücksichtigt werden. Insbesondere kann damit der Auswertealgorithmus schärfer geschaltet werden, also üblicherweise eine Schwellenabsenkung erfolgen.

Durch die in den abhängigen Ansprüchen aufgeführten Maßnahmen und Weiterbildungen sind vorteilhafte Verbesserungen der im unabhängigen Patentanspruch angegebenen Vorrichtung möglich.

Dabei weist die Vorrichtung wenigstens einen Sensor zur Überwachung eines Schließzustands der Fronthaube auf. Dieser Sensor ist vorzugsweise als Schalter ausgebildet. Es sind jedoch auch berührungslose Sensoren wie ein Hall-Element oder auch ein Kraftsensor möglich. Wird ein mechanischer Schalter verwendet, dann sollte dieser vorteilhafterweise bei geschlossener Fronthaube geöffnet sein, sodass der Schalterkontakt nicht unnötig belastet wird, da anzunehmen ist, dass in der Mehrzahl der Fälle die Fronthaube geschlossen ist, sodass die Kontaktbelastung minimiert wird. Ob der mechanische Schalter geöffnet oder geschlossen ist, wird dann üblicherweise in einer Widerstandsschaltung ausgewertet. Als Kraftsensor kommen beispielsweise kraftempfindliche Unterlagsscheiben in Frage.

Vorzugsweise werden vier Sensoren eingesetzt, jeweils zwei im vorderen Bereich der Fronthaube und zwei im hinteren Bereich der Fronthaube. Dies führt vorteilhafterweise zu einer Redundanz bei der Sensierung. Dabei muss die Schalterauswertung eine Fehlererkennung für einen Kurzschluss und eine Unterbrechung ermöglichen, sodass eine analoge Signalauswertung notwendig ist.

Vorteilhafterweise wird bei der Verwendung eines Schalters als Sensor dieser durch die Fronthaubendämpfergummis betätigt. Dies sichert ein besonders zuverlässiges Signal zur Erkennung des Schließzustands der Fronthaube.

### Zeichnung

Ausführungsbeispiele der Erfindung sind in der Zeichnung dargestellt und werden in der nachfolgenden Beschreibung näher erläutert.

Es zeigen Figur 1 ein Blockschaltbild der erfindungsgemäßen Vorrichtung, Figur 2 eine Anordnung der Sensoren zur Überwachung des Schließzustands der Fronthaube und Figur 3 eine Auswerteschaltung bei einem Schalter.

Beschreibung

Bei Fahrzeugfrontalcrashes ist die definierte Fronthaubenverformung mit ausschlaggebend für das Crash- und Energieabsorptionsverhalten der Fahrzeugvorderstruktur. Nur eine vor dem Crash ganz geschlossene Fronthaube liefert die erwartete, für die Algorithmusparametereinstellung zugrundegelegte Energieabsorption.

Die Front- oder in den meisten Fällen auch Motorhaube muss im Crash definiert zwischen vorderem oder gegebenenfalls hinterem Haubenschloss und hinteren oder gegebenenfalls vorderen Scharnieren nach oben aufknicken und darf nicht in die Windschutzscheibe eindringen. Nur dann liefert sie die gewünschte Frontstrukturversteifung und das gewünschte Absorptionsverhalten. Dabei ist augenfällig, dass eine hinten angeschlagene Fronthaube im Crash sicherer ist als eine vorne angeschlagene. Zwei Scharniere halten eine Fronthaube besser fest oder in Position als ein entriegelbares Schloss. Eine durch die Windschutzscheibe durchschneidende Haube wäre in den meisten Fällen von verheerender Insassenverletzungsgefahr aufgrund eines Guillotineneffekts.

Es wird derzeit nicht überwacht, ob die Fronthaube vor dem Crash ganz geschlossen ist. Algorithmusparametereinstellungen gelten wie gesagt aber nur für ganz geschlossene Fronthauben. Bei vorne offener oder bei nur in der ersten Stufe eingerasteter bzw. zukünftig bei hinten zum Fußgängerschutz angestellter Haube kann diese nicht die erwartete Crashenergie absorbieren und in Verformungsarbeit umsetzen. D.h. die Kräfte auf die Insassen werden schneller größer. Da schneller harte Fahrzeugstrukturteile getroffen werden und die Fahrzeugvorderstrukturverformung größer ist, müssen die Schutzsysteme Gurtstraffer, Gurtkraftbegrenzer, Frontairbags und Kniebags schneller aktiviert werden. Der Auslösealgorithmus muss auf einen empfindlicheren Parametersatz umgestellt werden.

Auch bei einer hinten zum Fußgängerschutz hochgestellten Haube muss zukünftig sichergestellt sein, dass diese beim Frontcrash nicht in die Windschutzscheibe eindringt.

Erfindungsgemäß wird daher vorgeschlagen, dass der Zustand der Fronthaube überwacht wird. Dafür wird wenigstens ein Sensor vorgeschlagen, der den Schließzustand der Fronthaube überwacht. Dieser Sensor kann vorzugsweise ein Schalter sein oder eine Gruppe von Schaltern. Es sind jedoch auch berührungslos messende Sensoren möglich, aber auch Kraftsensoren.

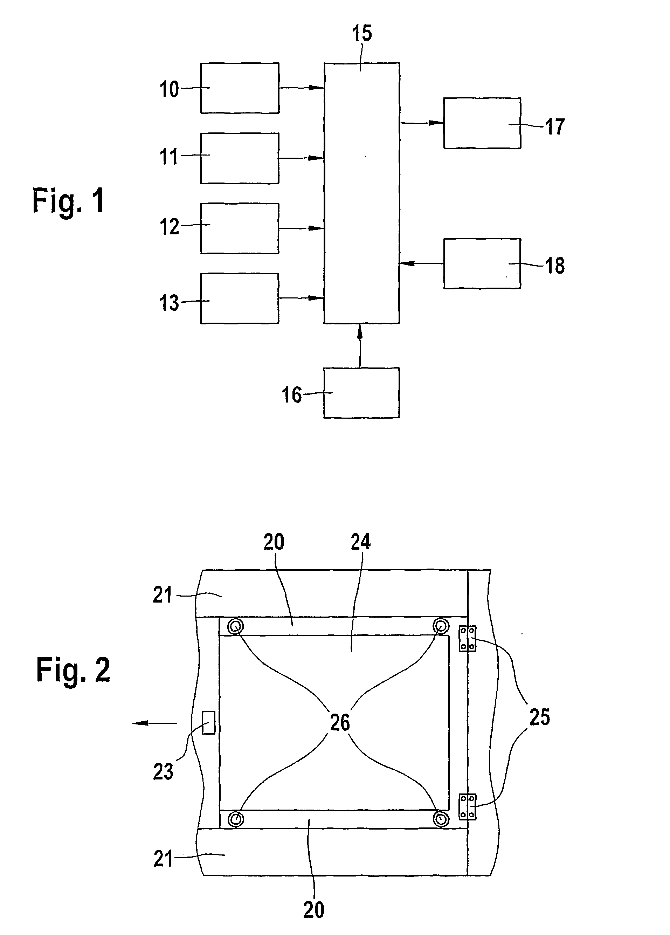

Figur 1 zeigt in einem Blockschaltbild die erfindungsgemäße Vorrichtung. Vier Schalter 10 bis 13, die den Schließzustand der Fronthaube überwachen, sind über Leitungen an ein Airbagsteuergerät 15 angeschlossen. Das Airbagsteuergerät 15 erkennt also aus den Signalen der Sensoren 10 bis 13, ob die Fronthaube richtig geschlossen wurde. Durch eine kinematische Sensorik 16, vorzugsweise Beschleunigungssensoren und Precrashsensoren und eine Innenraumerkennung 18 ist das Airbagsteuergerät 15 über den Beladungszustand des Fahrzeugs und die Crashschwere informiert. In Abhängigkeit davon berechnet das Airbagsteuergerät 15 die Auslösezeiten für die Rückhaltemittel wie Airbags oder Gurtstraffer oder Überrollbügel. Gemäß diesen Auslösezeiten steuert das Airbagsteuergerät 15 dann die Rückhaltemittel 17 an.

Figur 2 zeigt ein Anordnungsbeispiel von Schaltern zur Überwachung des Schließzustands der Fronthaube. Es ist eine Aufsicht auf eine geöffnete Motorraumbucht 24 dargestellt, d.h. die Fronthaube selbst ist nicht zu sehen, jedoch das durch die Fronthaube Verdeckte. Im hinteren Bereich der Fronthaube sind zwei Scharniere 25 vorgesehen, während im vorderen Bereich der Fronthaube ein Haubenschloss 23 angeordnet ist. An den Fronthaubenauflagen 20 sind Dämpfergummis 26 mit Kraftsensoren oder mit Schaltern zur Überwachung des Schließzustands der Fronthaube angeordnet. Die Motorraumbucht 24 befindet sich zwischen den Fronthaubenauflagen. Außen sind die Kotflügel 21 zu sehen. Diese Anordnung ist besonders redundant in Bezug auf die Sensierung des Schließzustands der Fronthaube und damit besonders sicher.

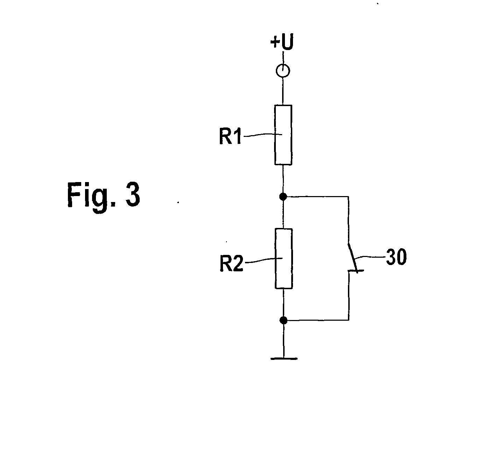

Figur 3 zeigt ein Schaltungsbeispiel, wie ein Schalter 30 elektrisch ausgewertet wird. Eine Widerstandsreihenschaltung aus den Widerständen R1 und R2 wird mit einer vorgegebenen Spannung +U beaufschlagt. Parallel zum unteren Widerstand R2, der an Masse angeschlossen ist, ist der Schalter 30 angeordnet. Ist der Schalter geschlossen, wird also der Widerstand R2 kurzgeschlossen. Damit verändert sich der Gesamtwiderstand der Anordnung und bei einer vorgegebenen Spannung +U wird der Strom größer. Auch die Teilspannungen über den Widerständen R1 und der Parallelschaltung aus R2 und dem Schalter 30 verändern sich in Abhängigkeit vom Schließzustand des Schalters. Damit sind also sowohl der durch die Anordnung durchfließende Strom als auch die Teilspannungen geeignete Messgrößen zur Erfassung des Schaltzustands des Schalters 30.

## Patentansprüche

1. Vorrichtung zur Überwachung einer Fronthaube eines Fahrzeugs, wobei die Vorrichtung mit einem Steuergerät (15) für ein Rückhaltesystem derart verbindbar ist, dass ein Signal von der Vorrichtung zur Beeinflussung eines Auslösealgorithmus im Steuergerät (15) verwendet wird,
**dadurch gekennzeichnet, dass** die Vorrichtung wenigstens einen Sensor (10 - 13) zur Überwachung eines Schließzustands der Fronthaube aufweist.

2. Vorrichtung nach Anspruch 1, **dadurch gekennzeichnet, dass** der wenigstens eine Sensor (10 - 13) als mechanischer Schalter (30) ausgebildet ist.

3. Vorrichtung nach Anspruch 2, **dadurch gekennzeichnet, dass** die Vorrichtung derart konfiguriert ist, dass der mechanische Schalter (30) bei geschlossener Fronthaube geöffnet ist.

4. Vorrichtung nach Anspruch 1, **dadurch gekennzeichnet, dass** der wenigstens eine Sensor (10 - 13) derart konfiguriert ist, dass der Sensor (10 - 13) berührungslos misst.

5. Vorrichtung nach Anspruch 4, **dadurch gekennzeichnet, dass** der Sensor (10 - 13) ein Hall-Element aufweist.

6. Vorrichtung nach Anspruch 4, **dadurch gekennzeichnet, dass** der Sensor (10 - 13) ein Kraftsensor ist.

7. Vorrichtung nach Anspruch 1, **dadurch gekennzeichnet, dass** die Vorrichtung vier Sensoren (10 -13) aufweist, wobei zwei Sensoren im vorderen Bereich und zwei Sensoren im hinteren Bereich der Fronthaube angeordnet sind.

8. Vorrichtung nach Anspruch 2, **dadurch gekennzeichnet, dass** der Schalter (30) derart konfiguriert ist, dass der Schalter (30) durch ein Fronthaubendämpfergummi (26) betätigbar ist.

## Claims

1. Device for monitoring a bonnet of a vehicle, the device being capable of being connected to a control unit (15) for a restraint system in such a way that a signal from the device is used to influence a triggering algorithm in the control unit (15), **characterized in that** the device has at least one sensor (10 - 13) for monitoring a closed state of the bonnet.

2. Device according to Claim 1, **characterized in that** the at least one sensor (10 - 13) is embodied as a mechanical switch (30).

3. Device according to Claim 2, **characterized in that** the device is configured in such a way that the mechanical switch (30) is opened when the bonnet is closed.

4. Device according to Claim 1, **characterized in that** the at least one sensor (10 - 13) is configured in such a way that the sensor (10 - 13) measures in a contactless fashion.

5. Device according to Claim 4, **characterized in that** the sensor (10 - 13) has a Hall element.

6. Device according to Claim 4, **characterized in that** the sensor (10 - 13) is a force sensor.

7. Device according to Claim 1, **characterized in that** the device has four sensors (10 - 13), two sensors being arranged in the front region and two sensors being arranged in the rear region of the bonnet.

8. Device according to Claim 2, **characterized in that** the switch (30) is configured in such a way that the switch (30) can be activated by means of a bonnet damper rubber element (26).

## Revendications

1. Dispositif pour surveiller le capot d'un véhicule, relié à un appareil de commande (15) d'un système de retenue de façon à utiliser un signal du dispositif influençant l'algorithme de déclenchement d'un appareil de commande (15),
**caractérisé en ce que**
le dispositif comporte au moins un capteur (10-13) pour surveiller l'état de fermeture du capot.

2. Dispositif selon la revendication 1,
**caractérisé par**
au moins un capteur (10-13) réalisé sous forme de commutateur mécanique (30).

3. Dispositif selon la revendication 2,
**caractérisé en ce que**
le dispositif est configuré pour que le commutateur mécanique (30) soit ouvert lorsque le capot est fermé.

4. Dispositif selon la revendication 2,
**caractérisé en ce qu'**
au moins un capteur (10-13) est configuré pour mesurer sans contact.

5. Dispositif selon la revendication 4,
**caractérisé en ce que**
le capteur (10-13) comporte un élément à effet Hall.

6. Dispositif selon la revendication 4,
**caractérisé en ce que**
le capteur (10-13) est un capteur dynamométrique.

7. Dispositif selon la revendication 1,
**caractérisé en ce que**
le dispositif comporte quatre capteurs (10-13) parmi lesquels deux capteurs sont dans la zone avant et deux capteurs dans la zone arrière du capot.

8. Dispositif selon la revendication 2,
**caractérisé en ce que**
le commutateur (30) est configuré pour être actionné par un caoutchouc amortisseur (26) du capot.
